# EUROPÄISCHE PATENTSCHRIFT

(11) **EP 3 371 052 B1**
(45) Veröffentlichungstag und Bekanntmachung des Hinweises auf die Patenterteilung: **04.09.2019**
(21) Anmeldenummer: 16794927.0
(22) Anmeldetag: 03.11.2016
(51) Int. Cl.: B64D 11/00, E05F 1/10, E05F 3/10, E05F 3/22

(54) **ÜBERKOPF-GEPÄCKFACH FÜR EIN FLUGZEUG**
OVERHEAD LUGGAGE COMPARTMENT FOR AN AIRCRAFT
STRUCTURE SUSPENDUE DE COMPARTIMENT POUR BAGAGES POUR AÉRONEF

(30) Priorität: 03.11.2015 AT 509292015
(43) Veröffentlichungstag der Anmeldung: 12.09.2018
(73) Patentinhaber: FACC AG, 4910 Ried im Innkreis (AT)
(72) Erfinder: SCHÖRKHUBER, Jakob, 4682 Geboltskirchen (AT)
(74) Vertreter: Sonn & Partner Patentanwälte
(86) Internationale Anmeldenummer: PCT/AT2016/060097
(87) Internationale Veröffentlichungsnummer: WO 2017/075640

(56) Entgegenhaltungen:
- DE-A1- 4 335 151
- US-A1- 2002 175 244
- US-A1- 2011 253 714
- US-B1- 8 770 515

## Beschreibung

Die Erfindung betrifft ein Überkopf-Gepäckfach für ein Flugzeug mit einem oberen Gepäckfachelement, mit einem unteren Gepäckfachelement, welches zwischen einer Schließ- und einer Offenstellung beweglich ist, mit einer Halteeinrichtung zum Halten des unteren Gepäckfachelements in dessen Schließstellung, mit einer Hebefeder zur Unterstützung der Bewegung des unteren Gepäckfachelements aus der Offenstellung in die Schließstellung, und mit einer Rückhalteeinrichtung zur Fixierung der Hebefeder im gespannten Zustand in der Offenstellung des unteren Gepäckfachelementes.

Solche Gepäckfächer sind im Stand der Technik seit langem bekannt. Diese Überkopf-Gepäckfächer verfügen vielfach über einen Rastmechanismus, mit dem das bewegliche Teil des Gepäckfaches in der Schließstellung fixiert werden kann. Um das Schließen des Gepäckfaches zu erleichtern, sind Hebefedern vorgesehen. Die Hebefedern werden beim Öffnen des Gepäckfaches gespannt, so dass die gespeicherte Federenergie für den Schließvorgang zur Verfügung steht. Üblicherweise wurde bisher die Federkraft der Hebefedern auf den unbeladenen Zustand des Gepäckfaches ausgelegt. Dadurch bleibt das Gepäckfach selbst dann in der Offenstellung, wenn das Gepäckfach nicht mit Gepäckstücken beladen wurde.

Darüber hinaus sind im Stand der Technik Gepäckfächer bekannt geworden, bei welchen abhängig vom Beladungszustand des Gepäckfaches zusätzliche Federelemente zugeschaltet werden können.

Ein gattungsgemäßes Gepäckfach ist aus der DE 43 35 151 A1 bekannt. US 8770515 B1 und US 2011253714 A1 zeigen weitere Gepäckfächer mit lastabhängiger Aktivierung einer Unterstützung des Schließvorgangs

Aus der AT 410 536 B ist eine Aufhängevorrichtung für absenkbare Gepäckablagebehälter bekannt. Bei dieser Ausführung ist am Behälter eine Einrichtung zur Erfassung des Gewichts des Behälters angeordnet, damit in Abhängigkeit des erfassten Gewichts des Behälters ein zusätzliches Federelement zugeschaltet werden kann. Das zusätzliche Federelement wird durch eine Rückhalteeinrichtung in Form eines bewegbaren Hakens fixiert, bis der Behälter mit Gepäckstücken beladen wird. Dadurch sinkt der Behälter gegen die Federkraft einer Messfeder nach unten, wobei über einen Bowdenzug der Haken freigegeben wird, mit welchem eine Hülse des Federelements zurückgehalten wird. Dadurch kann das zusätzliche Federelement zusätzlich zur Schraubenfeder die Bewegung des Behälters in die geschlossene Stellung auch bei voller Beladung unterstützen. Demnach bezieht sich diese bekannte Ausführung auf eine gewichtsabhängige Unterstützung des Schließvorgangs.

Nachteiligerweise kann der Benutzer jedoch keinen Einfluss darauf nehmen, ob die zusätzliche Federunterstützung für den Schließvorgang freigeschalten wird. Die Zuschaltung des weiteren Federelements hängt allein vom Beladungszustand des Gepäckablagebehälters ab. Weiters ist bei diesem Stand der Technik eine komplexe Mechanik zur Erfassung des Beladungszustands, d.h. zum Abwiegen des Gepäckfaches, erforderlich. Zudem ist nachteiligerweise ein fixer Grenzwert vorgegeben, bis zu welchem keine Unterstützung des Schließvorganges erfolgt.

Die AT 413 812 B offenbart ein weiteres Ausführungsbeispiel eines absenkbaren Gepäckablagebehälters, bei welcher an der Seitenwand des absenkbaren Behälters eine Schaltkulisse angeordnet ist, welche in geöffneter Stellung des Gepäckablagebehälters mit einem Schalthebel des Federelements zusammenwirkt, um eine Umschaltung des Federelements in Abhängigkeit des Gewichts des Behälters zu bewirken. Je nach gewichtsbedingter Lageveränderung des Behälters wird die Schaltkulisse bewegt. Im Fall eines mittelmäßig beladenen Behälters wird dieser gegen die Kraft der Messfeder nach unten bewegt. Dadurch führt auch die Schaltkulisse eine entsprechende Bewegung aus, sodass der Schalthebel auf der tiefer liegenden Stufe der Schaltkulisse zu liegen kommt und dadurch eine Drehbewegung einer mit dem Schalthebel verbundenen Scheibe bewirkt. Dadurch wird das Federelement freigegeben, welches somit beim Schließvorgang seine Kraft ausüben kann. Bei dieser mittleren Beladung des Behälters wirkt somit nur das größere Federelement. Im vollbeladenen Zustand des Behälters kommt der Schalthebel auf der untersten Stufe der Schaltkulisse zu liegen, sodass die Scheibe eine weitere Drehbewegung vollzieht. Dadurch wird sowohl die Hülse des Federelements als auch das Federelement freigegeben, sodass beide Federelemente ihre Kraft ausüben können. Demnach wurde auch in der AT 413 812 B eine weitere Ausführung vorgeschlagen, bei welcher die Federunterstützung des Schließvorgangs vom Beladungszustand abhängig gemacht wird. Diese Ausführung bringt dieselben Nachteile wie die oben diskutierte AT 410 536 B mit sich.

Darüber hinaus ist es aus der WO 03/033346 A1 bekannt, das Gepäckfach mit einer Einrichtung zum Halten des Behälters in seiner geöffneten Stellung auszustatten. Diese Einrichtung wird durch eine federnd gelagerte Kugel gebildet, die in geöffneter Stellung des Behälters in eine entsprechende Rastvertiefung eingreift. Dadurch kann der Behälter zum Beladen in seiner geöffneten Position gehalten werden und dadurch die Handhabung erleichtert werden. Bei einer solchen Ausführung könnten auch stärkere Hebefedern verwendet werden. Nachteiligerweise muss jedoch die Federkraft, welche die Kugel in die Rastvertiefung drückt, mindestens so groß sein, dass sie nicht durch die Kraft der Hebefeder überwunden wird. Dies hat zur Folge, dass eine vergleichsweise große Bedienkraft zum Schließen des Gepäckfaches aufgewendet werden muss.

US 2011253714 A1 offenbart eine Hebevorrichtung, welche das Schließen eines Gepäckfachs mittels Federkraft unterstützt. Die Hebevorrichtung weist eine Feder auf, welche mit einer Stange verbunden ist. Das eine Ende der Feder ist mit einem feststehenden Teil des Gepäckfachs, das andere Ende der Stange ist mit einem beweglichen Teil des Gepäckfaches verbunden. Die bekannte Vorrichtung weist zudem eine Blockiervorrichtung auf, welche die Bewegung der Stange in einem verrasteten Zustand blockiert und in einem entrasteten Zustand freigibt. Während des Öffnens der beweglichen Komponente des Gepäckfachs wird die Feder gespannt, welche mit der Blockiervorrichtung in der gespannten Position gehalten werden kann. Die Blockiervorrichtung weist einen Magneten zur Betätigung einer Sperrklinke auf, welche mit der Stange zusammenwirkt. Der Magnet kann durch Betätigung eines Druckknopfs aktiviert werden, damit der Schließvorgang durch Federkraft unterstützt wird. Sofern der Druckknopf nicht betätigt wird, bleibt die Feder gespannt und das Gepäckfach lässt sich ohne Federkraftunterstützung schließen. Darüber hinaus ist eine Haltehülse vorgesehen, mit welcher gewährleistet werden soll, dass die Sperrklinke nur in der Offenstellung und im beladenen Zustand auf Knopfdruck entrastet werden kann. Bei diesem Stand der Technik kann die Federkraftunterstützung nur durch Beladung des Gepäckfachs freigegeben werden kann. Im unbeladenen Zustand bleibt die Feder durch die Blockiervorrichtung vorgespannt und es erfolgt keine Unterstützung des Schließvorgangs.

Die DE 102013003364 A1 offenbart eine Kraftunterstützungsvorrichtung für ein Gepäckfach, welches eine absenkbare Schale aufweist. Die Kraftunterstützung beim Schließen der Schale erfolgt durch eine Feder, welche den Schließvorgang ab einem bestimmten Beladungsgewicht der Schale mittels Federkraft unterstützt. Im inaktiven Zustand wird die Feder mit Arretierelementen fixiert. Demnach bezieht sich dieser Stand der Technik lediglich auf ein andersartiges Wägesystem.

Demnach besteht die Aufgabe der vorliegenden Erfindung darin, die Nachteile des Standes der Technik zu beseitigen oder zumindest zu lindern. Die Erfindung setzt sich daher insbesondere zum Ziel, ein Überkopf-Gepäckfach der eingangs angeführten Art zu schaffen, bei welchem der Schließvorgang durch Federkraft unterstützt werden kann, ohne die Einleitung des Schließvorgangs zu Beginn wesentlich zu erschweren.

Diese Aufgabe wird durch ein Überkopf-Gepäckfach mit den Merkmalen von Anspruch 1 gelöst. Bevorzugte Ausführungen sind in den abhängigen Ansprüchen angegeben.

Erfindungsgemäß ist ein Betätigungsgriff zur Freigabe der Rückhalteeinrichtung in der Offenstellung des unteren Gepäckfachelementes vorgesehen, wobei das untere Gepäckfachelement wahlweise mit Unterstützung durch die Hebefeder oder mit im gespannten Zustand fixierter Hebefeder von der Offenstellung in Richtung der Schließstellung beweglich ist.

Um die Unterstützung des Schließvorgangs durch die Hebefeder freizugeben, kann der Benutzer in der Offenstellung des Gepäckfaches die Rückhalteeinrichtung über den Betätigungsgriff von einer Halteposition, d.h. einem aktiven Zustand, in eine Auslöseposition, d.h. einen inaktiven Zustand, bringen. In der Auslöseposition der Rückhalteeinrichtung ist die Hebefeder freigegeben, so dass sich die Hebefeder bei der Bewegung des unteren Gepäckfachelementes von der Offenstellung in Richtung der Schließstellung entspannen kann. Dadurch wird der Schließvorgang erleichtert. Die Rückhalteeinrichtung ist zudem darauf ausgelegt, dass die Bewegung des unteren Gepäckfachelementes von der Schließstellung in Richtung der Offenstellung im unbetätigten Zustand des Betätigungsgriffes ohne Unterstützung durch die Hebefeder, d.h. im gespannten Zustand der Hebefeder, vorgenommen werden kann.

Erfindungsgemäß kann der Benutzer den Schließvorgang unabhängig vom Beladungszustand des unteren Gepäckfachelementes wahlweise mit oder ohne Unterstützung durch die Hebefeder durchführen. Beispielsweise kann zum Schließen eines unbeladenen Gepäckfaches darauf verzichtet werden, die Hebefeder über den Betätigungsgriff freizugeben. Im Unterschied zum Stand der Technik ist es jedoch nicht erforderlich, eine Einrichtung zur Erfassung des Beladungszustands des unteren Gepäckfachelementes vorzusehen. Somit kann die Ausführung des Gepäckfaches wesentlich einfacher gestaltet werden. Weiters können erhebliche Gewichtsvorteile erzielt werden. In der Halteposition ist die Haltekraft der Rückhalteeinrichtung bevorzugt dazu eingerichtet, das untere Gepäckfachelement nicht nur im beladenen, sondern auch im unbeladenen Zustand, ohne Gepäckstücke im Aufnahmeraum des Gepäckfaches selbständig (d.h. ohne manuelle Unterstützung durch den Benutzer) in der Offenstellung zu halten. Diese Ausführung ermöglicht es, das Gepäckfach mit einer im Vergleich zum Stand der Technik stärkeren Hebefeder zur Unterstützung des Schließvorgangs auszustatten. Anders als beim Stand der Technik ist es nicht erforderlich, die Hebefeder zwischen dem oberen und dem unteren Gepäckfachelement auf den unbeladenen Zustand des Gepäckfaches auszulegen, um auf diese Weise ein ungewolltes Schließen des Gepäckfaches im unbeladenen Zustand des unteren Gepäckfachelements zu vermeiden. Demgegenüber kann das untere Gepäckfachelement durch die Rückhalteeinrichtung gegen die Kraft der Hebefeder in der Offenstellung gehalten werden. Die Erfindung bringt gegenüber dem Stand der Technik zudem den Vorteil mit sich, dass die von der Rückhalteeinrichtung in der Offenstellung ausgeübte Haltekraft zumindest nicht ausschließlich durch das manuelle Bewegen des unteren Gepäckfachelements in Richtung der Schließstellung überwunden werden muss. Zur Einleitung des Schließvorgangs ist der Betätigungsgriff zwischen einer ersten Position und einer zweiten Position beweglich, um die Rückhalteeinrichtung von der Halteposition in die Auslöseposition zu bringen. Vorzugsweise ist der Betätigungsgriff mit einer Feder so verbunden, dass der Betätigungsgriff nach dessen Betätigung unter der Wirkung der Feder selbsttätig in die erste Position zurückkehrt. Vorteilhafterweise ist die Bewegung des Betätigungsgriffs von der ersten Position in die zweite Position von der Bewegung des unteren Gepäckfachelements verschieden. Dies bedeutet, dass die Betätigung der Rückhalteeinrichtung anders als beim Stand der Technik nicht nur durch Hochschwenken des unteren Gepäckfachelementes erfolgt. Erfindungsgemäß kann die Rückhalteeinrichtung unabhängig von der Bewegung des unteren Gepäckfachelementes in die Auslöseposition überführt werden. Vorteilhafterweise kann daher die Freigabe der zweiten Halteeinrichtung und die Bewegung, insbesondere Verschwenkung, des unteren Gepäckfachelementes in die Schließstellung voneinander entkoppelt werden. Dadurch kann die Bedienung des Gepäckfaches wesentlich komfortabler gestaltet werden. Bevorzugt ist der Betätigungsgriff an einer Vorder- bzw. Sichtseite des unteren Gepäckfachelements angeordnet, um die Bedienung durch einen Benutzer zu erleichtern.

Für die Zwecke dieser Offenbarung beziehen sich die Orts- und Richtungsangaben "oben", "unten" etc. auf den im Flugzeug eingebauten, bestimmungsgemäßen Betriebszustand des Überkopf-Gepäckfaches.

Gemäß einer besonders bevorzugten Ausführung ist der Betätigungsgriff weiters zur Freigabe der Halteeinrichtung in der Schließstellung des unteren Gepäckfachelementes eingerichtet. Bei dieser Ausführung ist daher derselbe Betätigungsgriff für die Halteeinrichtung zur Fixierung des unteren Gepäckfachelementes in der Schließstellung und für die Rückhalteeinrichtung zur wahlweisen Freigabe der Hebefeder in der Offenstellung vorgesehen. Durch den Betätigungsgriff kann daher sowohl die Halteeinrichtung als auch die Rückhalteeinrichtung betätigt werden. Zu diesem Zweck kann der Betätigungsgriff über eine Kraftübertragungseinrichtung sowohl mit der Halteeinrichtung als auch mit der Rückhalteeinrichtung verbunden sein. Diese Ausführung hat den Vorteil, dass die Bedienung des Gepäckfaches besonders einfach und intuitiv ist. Weiters kann eine konstruktiv einfache Bauweise vorgesehen sein, welche sich durch geringe Kosten und Gewichtseinsparungen auszeichnet.

Die Halteeinrichtung weist insbesondere ein Anschlagelement auf, welches vorzugsweise an der Unterseite des Seitenpaneels des oberen Gepäckfachelements angeordnet ist. Als Anschlagelement kann ein Schlagstift vorgesehen sein. Die Halteeinrichtung kann weiters eine Hakeneinrichtung mit vorzugsweise zwei kooperierenden Haken aufweisen, welche insbesondere an der Seitenwand des unteren Gepäckfachelements angeordnet ist. Selbstverständlich kann auch das Anschlagelement an der Seitenwand des unteren Gepäckfachelementes und die Hakeneinrichtung an dem Seitenpaneel des oberen Gepäckfachelementes angeordnet sein. In der Schließstellung des unteren Gepäckfachelementes ist die Hakeneinrichtung mit dem Anschlagelement verrastet.

Zur Betätigung der ersten bzw. zweiten Halteeinrichtung ist es günstig, wenn als Betätigungsgriff ein Schwenkgriff vorgesehen ist, welcher vorzugsweise an der Vorderseite des unteren Gepäckfachelementes, insbesondere im Wesentlichen mittig zwischen zwei Seitenwänden des unteren Gepäckfachelementes, angeordnet ist. Zur Überführung der Rückhalteeinrichtung vom aktiven in den inaktiven Zustand wird der Schwenkgriff verschwenkt.

Gemäß einer weiteren besonders bevorzugten Ausführung ist der Schwenkgriff dazu eingerichtet, in der Offenstellung des unteren Gepäckfachelementes die Rückhalteeinrichtung durch Verschwenkung des Schwenkgriffs um einen ersten Schwenkwinkel und in der Schließstellung des unteren Gepäckfachelementes die Halteeinrichtung durch Verschwenkung des Schwenkgriffs um einen zweiten Schwenkwinkel freizugeben, wobei der zweite Schwenkwinkel kleiner als der erste Schwenkwinkel ist. Demnach ist der erste Schwenkwinkel des Betätigungsgriffs für die Freigabe der Rückhalteeinrichtung in der Offenstellung größer als der zweite Schwenkwinkel für die Freigabe der Halteeinrichtung in der Schließstellung des unteren Gepäckfachelementes. Dadurch wird eine besonders intuitive Bedienung des Gepäckfaches ermöglicht, da unterschiedliche Bewegungen für die verschiedenen Funktionen des Betätigungsgriffes vorgesehen sind.

Besonders bevorzugt ist es, wenn der Schwenkgriff gegen die Kraft zumindest einer Feder um den ersten, größeren Schwenkwinkel bzw. um den zweiten, kleineren Schwenkwinkel aus einer unbetätigten Ruhestellung verschwenkbar ist.

Gemäß einer besonders bevorzugten Ausführung ist für die Verschwenkung des Schwenkgriffes um den ersten Schwenkwinkel eine größere Handkraft als für die Verschwenkung des Schwenkgriffes um den zweiten Schwenkwinkel erforderlich.

Um eine unabsichtliche Freigabe der Hebefeder durch den Benutzer zu vermeiden, ist bevorzugt vorgesehen, dass die Kraftkennlinie für die Betätigung des Schwenkgriffes zwischen dem zweiten Schwenkwinkel und dem ersten Schwenkwinkel zumindest abschnittsweise progressiv ist, d.h. stärker als linear steigt.

Gemäß einer weiteren besonders bevorzugten Ausführungsform ist das untere Gepäckfachelement von der Schließstellung in die Offenstellung um eine erste Wegstrecke im entspannten Zustand der Hebefeder und um eine zweite Wegstrecke gegen die Kraft der Hebefeder beweglich, wobei die erste Wegstrecke des unteren Gepäckfachelementes kleiner als die zweite Wegstrecke des unteren Gepäckfachelementes ist. Demnach ist die Hebefeder bei dieser Ausführung derart an dem Gepäckfach gelagert, dass die Hebefeder im entspannten Zustand gehalten wird, wenn das untere Gepäckfachelement von der Schließstellung um die erste Wegstrecke in eine Zwischenposition bewegt wird. Bei der Bewegung des unteren Gepäckfachelementes von der Zwischenstellung in die Offenstellung wird die Hebefeder gespannt. Diese Ausführung bietet den Vorteil, dass das untere Gepäckfachelement in der teilweise geöffneten Zwischenstellung ergriffen werden kann, um das untere Gepäckfachelement gegen die Kraft der Hebefeder in die Offenstellung zu ziehen. Demnach wird eine besonders einfache und komfortable Bedienung des Überkopf-Gepäckfaches ermöglicht. Wenn die Hebefeder in der Schließstellung im gespannten Zustand vorliegt, weil der Schließvorgang ohne Unterstützung der Hebefeder durchgeführt wurde, kann das untere Gepäckfachelement von der Schließstellung direkt in die Offenstellung gebracht werden.

Für die Zwecke dieser Offenbarung bezieht sich der "gespannte Zustand" der Hebefeder darauf, dass eine höhere Federenergie als im "entspannten Zustand" der Hebefeder gespeichert ist. Bevorzugt ist die Hebefeder jedoch auch im entspannten Zustand geringfügig gespannt.

Um das untere Gepäckfachelement auf einfache, komfortable Weise in die Offenstellung zu überführen, ist es günstig, wenn in dem um die erste Wegstrecke bewegten Zustand des unteren Gepäckfachelementes ein Öffnungsspalt von 1 bis 4 cm, vorzugsweise im Wesentlichen 3 cm, zwischen benachbarten Vorderkanten des oberen und unteren Gepäckfachelementes gebildet ist. Der Öffnungsspalt des Überkopf-Gepäckfaches in der Zwischenstellung ist darauf ausgelegt, dass der Benutzer zwischen die im Abstand zueinander positionierten Vorderkanten des unteren bzw. oberen Gepäckfachelementes eingreifen kann, um das untere Gepäckfachelement im unbeladenen Zustand manuell in die Offenstellung zu ziehen.

Um das Gepäckfachelement auch im unbeladenen Zustand sicher in der Offenstellung halten zu können, ist es von Vorteil, wenn die Rückhalteeinrichtung ein erstes und ein zweites Rastelement aufweist, welche in der Offenstellung des unteren Gepäckfachelementes, im gespannten Zustand der Hebefeder miteinander verrastbar sind, wobei die Verrastung des ersten und zweiten Rastelements durch Betätigung des Betätigungsgriffs lösbar ist. Im verrasteten Zustand der Rastelemente ist die Hebefeder im gespannten Zustand blockiert. Bevorzugt gelangt das erste Rastelement im Wesentlichen mit Erreichen der Offenstellung in Rasteingriff mit dem zweiten Rastelement, wenn die Hebefeder ausgehend vom entspannten Zustand in der Schließstellung des unteren Gepäckfachelementes bei der Bewegung in die Offenstellung gespannt wird. Vorteilhafterweise wird das untere Gepäckfachelement nicht nur im beladenen Zustand, sondern auch im unbeladenen Zustand selbständig in der Offenstellung gehalten. Durch Betätigung des Betätigungsgriffs werden die ersten und zweiten Rastelemente entrastet, so dass die Federkraft der Hebefeder freigegeben wird. Dadurch kann das untere Gepäckfach mit Unterstützung der Hebefeder in die Schließstellung überführt werden. Alternativ kann der Schließvorgang im blockierten Zustand der Hebefeder, d.h. ohne Unterstützung durch die Hebefeder, durchgeführt werden. Zu diesem Zweck wird das untere Gepäckfachelement von der Offen- in die Schließstellung bewegt, ohne zuvor die Rückhalteeinrichtung über den Betätigungsgriff freizugeben.

Gemäß einer besonders bevorzugten Ausführung sind ein Gehäuseelement zur Aufnahme der Hebefeder und ein relativ zum Gehäuseelement verschiebliches Kolbenelement zum Spannen der Hebefeder vorgesehen. Vorteilhafterweise wird die Hebefeder durch die Anordnung im Gehäuseelement geschützt, wobei zudem eine Verletzungsgefahr für den Benutzer vermieden werden kann. Als Hebefeder ist bevorzugt eine Schraubenfeder, insbesondere eine Schraubendruckfeder, vorgesehen. Die Schraubendruckfeder wird beim Überführen des unteren Gepäckfachelementes in die Offenstellung mittels des Kolbenelements gestaucht. Alternativ kann die Hebefeder jedoch auch durch eine Gasdruckfeder verwirklicht sein. Im freigegebenen Zustand der Rückhalteeinrichtung kann die gespeicherte Energie der Hebefeder beim Schließen des Überkopf-Gepäckfaches dazu genutzt werden, den Schließvorgang für den Benutzer zu erleichtern.

Bevorzugt ist das Gehäuseelement mit dem oberen Gepäckfachelement und das Kolbenelement mit dem unteren Gepäckfachelement verbunden. Umgekehrt kann das Gehäuseelement jedoch auch mit dem unteren Gepäckfachelement und das Kolbenelement mit dem oberen Gepäckfachelement verbunden sein. In beiden Fällen ist die Hebefeder derart an dem Gepäckfach angeordnet, dass die Bewegung des unteren Gepäckfachelementes in eine entsprechende Verschiebung des Kolbenelementes relativ zum Gehäuseelement umgewandelt wird.

Um die erfindungsgemäße Funktionalität mit möglichst geringen Adaptierungen in herkömmlichen Ausführungen von Überkopf-Gepäckfächern ergänzen zu können, ist es von Vorteil, wenn die Rückhalteeinrichtung zumindest teilweise im Inneren des Gehäuseelements angeordnet ist. Bevorzugt ist die Rückhalteeinrichtung vollständig innerhalb des Gehäuseelementes für die Hebefeder angeordnet. Diese Ausführung bringt den Vorteil mit sich, dass die Rückhalteeinrichtung und die Hebefeder in einem Bauelement integriert werden können. Zudem kann die Montage des Überkopf-Gepäckfaches erleichtert werden. Weiters kann das Gewicht des Überkopf-Gepäckfaches reduziert werden.

Um die Hebefeder mit Erreichen der Offenstellung des unteren Gepäckfachelementes im gespannten Zustand zu blockieren, ist es günstig, wenn das erste Rastelement der Rückhalteeinrichtung mit einer Kolbenstange des Kolbenelements verbunden ist. Beim Überführen des Gepäckfaches in die Offenstellung wird das Kolbenelement gegenüber dem Gehäuseelement verschoben. Das erste Rastelement ist derart an der Kolbenstange des Kolbenelementes angebracht, dass das erste Rastelement in der Offenstellung des unteren Gepäckfachelementes mit dem zweiten Rastelement in Eingriff gelangt, sofern das erste und zweite Rastelement nicht bereits miteinander verrastet sind.

Gemäß einer besonders bevorzugten Ausführung ist die Hebefeder zwischen einem Kolben des Kolbenelements und einem Gegenlagerelement angeordnet, wobei das Gegenlagerelement entsprechend der ersten Wegstrecke verschieblich in dem Gehäuseelement angeordnet ist. Aufgrund des Eigengewichts des unteren Gepäckfachelementes im unbeladenen Zustand wird das untere Gepäckfachelement von der Schließstellung in die teilweise geöffnete Zwischenstellung abgesenkt, wobei die Hebefeder im entspannten Zustand, d.h. im gegenüber dem gespannten Zustand schwächer bzw. nicht gespannten Zustand, verbleibt. Zwischen der Schließstellung und der Zwischenstellung wird das Gegenlagerelement relativ zu dem Gehäuseelement verschoben. In der Zwischenstellung schlägt das Gegenlagerelement an dem Gehäuseelement an, so dass eine weitere Verschiebung des Gegenlagerelements blockiert ist. Bei der Bewegung des unteren Gepäckfachelementes in Richtung der Offenstellung wird die Hebefeder über den Kolben gespannt, während das Gegenlagerelement unbeweglich am Gehäuseelement anliegt.

Um die Rückhalteeinrichtung bei Erreichen der Offenstellung im verrasteten Zustand anzuordnen, ist es günstig, wenn das Gegenlagerelement das zweite Rastelement, insbesondere eine Rastvertiefung, zur Verrastung mit dem ersten Rastelement an der Kolbenstange des Kolbenelements aufweist.

Zur Übertragung einer am Betätigungsgriff aufgebrachten Handkraft auf die Rückhalteeinrichtung für die Hebefeder ist es günstig, wenn der Betätigungsgriff über eine Auslöseeinrichtung mit der Rückhalteeinrichtung verbunden ist.

Insbesondere bei einer Ausführung des Betätigungsgriffs als Schwenkgriff ist es vorteilhaft, wenn die Auslöseeinrichtung eine mit dem Betätigungsgriff gekoppelte Drehwelle aufweist. Die Schwenkbewegung des Schwenkgriffs wird auf die damit drehfest verbundene Drehwelle übertragen, welche sich bevorzugt in Längsrichtung des unteren Gepäckfachelements von dem Schwenkgriff zu einer Seitenwand des unteren Gepäckfachelementes erstreckt. Alternativ bzw. zusätzlich zur Drehwelle kann ein Seilzugmechanismus vorgesehen sein.

Zur Aufnahme der Drehbewegung der Drehwelle ist es günstig, wenn die Auslöseeinrichtung einen mit der Drehwelle verbundenen Betätigungshebel aufweist, der mit der Halteeinrichtung verbunden ist. Demnach kann die Drehbewegung der Drehwelle in eine Verschwenkung des Betätigungshebels umgesetzt werden, welcher vorzugsweise an einer Seitenwand des unteren Gepäckfachelementes angeordnet ist. Die Verschwenkung des Betätigungshebels kann einerseits zur Freigabe der Halteeinrichtung in der Schließstellung des unteren Gepäckfachelementes und andererseits zur Freigabe der Rückhalteeinrichtung in der Offenstellung des unteren Gepäckfachelementes herangezogen werden.

Zur Freigabe der Rückhalteeinrichtung ist es günstig, wenn das erste Rastelement zumindest einen durch die Auslöseeinrichtung verschwenkbaren Rastschenkel aufweist, wobei vorzugsweise zwei um eine gemeinsame Schwenkachse gelagerte Rastschenkel vorgesehen sind. Bevorzugt weist der zumindest eine Rastschenkel einen Rastvorsprung auf, welcher im verrasteten Zustand mit einer entsprechenden Rastnut des zweiten Rastelementes in Eingriff steht. Um die Federunterstützung zu aktivieren, kann der Benutzer in der Offenstellung des unteren Gepäckfachelementes den Betätigungsgriff betätigen. Dadurch wird der zumindest eine Rastschenkel so weit verschwenkt, dass der Rasteingriff mit dem zweiten Rastelement gelöst wird. Im unverrasteten Zustand der Rückhalteeinrichtung wird die Hebefeder beim Schließvorgang entspannt, so dass die zur Überwindung des Gewichts des (beladenen) Gepäckfachelementes nötige Handkraft entsprechend reduziert wird.

Um die Rückhalteeinrichtung für die Hebefeder präzise auslösen zu können, weist die Auslöseeinrichtung bevorzugt einen Seilzug und einen mit dem Seilzug verbundenen, gegen die Kraft einer Feder verschieblichen Spreizkeil auf, welcher im verrasteten Zustand zwischen den Rastschenkeln des ersten Rastelements angeordnet ist. Durch die Anordnung des Spreizkeils zwischen den beiden Rastschenkeln des ersten Rastelementes ist die Hebefeder im gespannten Zustand fixiert. Um die Federkraft für die Unterstützung des Schließvorgangs freizugeben, kann der Spreizkeil mittels des Seilzugs so weit verschoben werden, dass der Rasteingriff der Rückhalteeinrichtung gelöst wird.

Um die Verrastung der Rückhalteeinrichtung über den Seilzug zu lösen, ist es von Vorteil, wenn die Rastschenkel mit einer weiteren Feder, insbesondere Schenkelfeder, verbunden sind, mit welcher die Rastschenkel in Richtung des unverrasteten Zustands vorgespannt sind. Durch die Wirkung der weiteren Feder wird der Rasteingriff der Rastschenkel selbständig gelöst, sobald der Spreizkeil mittels des Seilzuges entfernt wurde.

Wie im Stand der Technik an sich üblich, ist bevorzugt ein Dämpfungselement zur Dämpfung der Bewegung des unteren Gepäckfachelements von der Schließstellung in die Offenstellung vorgesehen. Das Dämpfungselement kann am einen Ende mit der Seitenwand des unteren Gepäckfachelementes und am anderen Ende mit dem Seitenpaneel des oberen Gepäckfachelementes verbunden sein. Darüber hinaus ist das Dämpfungselement bevorzugt dazu eingerichtet, die Bewegung des unteren Gepäckfachelementes von der Offenstellung in Richtung der Schließstellung zu dämpfen. Das Dämpfungselement erfüllt so einerseits den Zweck, das abrupte Absacken des unteren Gepäckfachelementes zu vermeiden, wenn das untere Gepäckfachelement im unbeladenen Zustand bei blockierter Hebefeder geöffnet wird. Andererseits wird ein abruptes Hochschnellen des unteren Gepäckfachelementes aus der Offenstellung verhindert, wenn die Rückhalteeinrichtung im unbeladenen Zustand des unteren Gepäckfachelementes gelöst wird.

Zur Erzielung einer kompakten Bauweise ist es günstig, wenn sich die Längsachse des Dämpfungselements im Wesentlichen parallel und in einem Abstand zur Längsachse der Hebefeder erstreckt. Vorzugsweise ist das Dämpfungselement benachbart der Hebefeder angeordnet. Gemäß einer alternativen Ausführungsvariante sind die Hebefeder und das Dämpfungselement in einem Feder-Dämpfer vereint.

Gemäß einer besonders bevorzugten Ausführungsform ist eine Seitenwand des unteren Gepäckfachelementes über ein Drehgelenk verschwenkbar an einem Seitenpaneel des oberen Gepäckfachelementes verbunden. Vorzugsweise weist das untere Gepäckfachelement zwei Seitenwände auf, welche jeweils über ein einziges Drehgelenk an dem zugehörigen Seitenpaneel des oberen, stationären Gepäckfachelementes angeordnet sind. Dadurch wird eine eingelenkige Lagerung des unteren Gepäckfachelementes erzielt.

Die Erfindung wird nachstehend anhand eines bevorzugten Ausführungsbeispiels, auf das sie jedoch nicht beschränkt sein soll, weiter erläutert. In der Zeichnung zeigt:
Fig. 1 eine schaubildliche Ansicht von einem erfindungsgemäßen Überkopf-Gepäckfach mit einem oberen Gepäckfachelement und zwei demgegenüber verschwenkbaren unteren Gepäckfachelementen, zwischen denen eine Hebefeder zur Unterstützung des Schließvorgangs angeordnet ist, wobei das eine Überkopf-Gepäckfach in der Schließstellung, das andere Überkopf-Gepäckfach in der Offenstellung abgebildet ist;
Fig. 2 eine Seitenansicht des Überkopf-Gepäckablagebehälters gemäß Fig. 1 in der Schließstellung, in der das untere Gepäckfachelement mittels einer Halteeinrichtung an dem oberen Gepäckfachelement gehalten ist;
Fig. 3 eine Seitenansicht des Überkopf-Gepäckablagebehälters gemäß Fig. 1 in einer einen Öffnungsspalt ausbildenden Zwischenstellung, aus der das untere Gepäckfachelement im unbeladenen Zustand manuell in die Offenstellung gezogen werden kann;
Fig. 4 eine Seitenansicht des Überkopf-Gepäckablagebehälters gemäß Fig. 1 in der Offenstellung, wobei die Hebefeder mittels einer Rückhalteeinrichtung im gespannten Zustand blockiert ist, bis ein Schwenkgriff an der Vorderseite des unteren Gepäckfachelements betätigt wird;
Fig. 5 eine schaubildliche Ansicht von Teilen des Gepäckfaches gemäß Fig. 1 bis 4 zur Veranschaulichung der Kraftübertragung vom Schwenkgriff auf die Halteeinrichtung für die Schließstellung des unteren Gepäckfachelementes und die Rückhalteeinrichtung für die Offenstellung des unteren Gepäckfachelementes;
Fig. 6 eine Seitenansicht entsprechend Fig. 5; und
Fig. 7 bis 11 Schnittansichten durch ein die Hebefeder aufnehmendes Zylinder-Kolben-Element in den verschiedenen Stellungen und Verwendungsmöglichkeiten des Gepäckfachelementes;

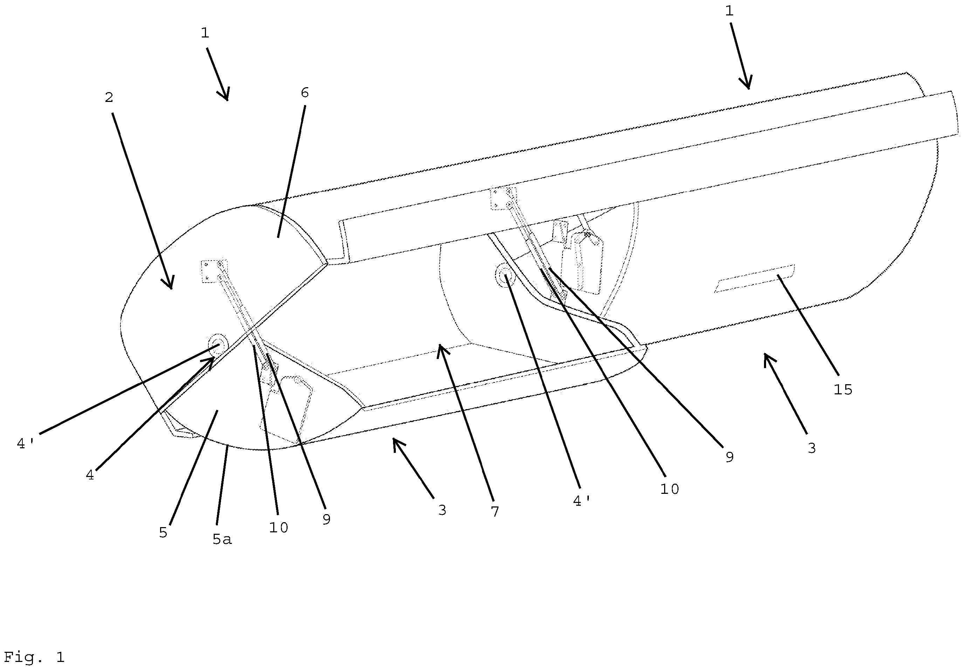

In Fig. 1 ist eine Anordnung von Überkopf-Gepäckfächern 1 zur Montage in einem (nicht dargestellten) Flugzeug gezeigt. In der Zeichnung sind beispielhaft zwei Überkopf-Gepäckfächer 1 nebeneinander angeordnet. Üblicherweise sind eine Vielzahl von gleichartigen Überkopf-Gepäckfächer vorgesehen.

Selbstverständlich kann jedoch auch nur ein einziges Überkopf-Gepäckfach 1 verwendet werden. Das Überkopf-Gepäckfach 1 weist ein feststehendes bzw. stationäres oberes Gepäckfachelement 2 auf, welches im montierten Betriebszustand an einem Strukturelement, insbesondere an einem Flugzeugrumpf (nicht gezeigt), befestigt ist. Darüber hinaus weist das Gepäckfach 1 ein bewegliches unteres Gepäckfachelement 3 auf. Das Gepäckfach 1 weist eine Längserstreckung auf, welche im eingebauten Zustand in Flugrichtung, d.h. in Längsrichtung des Flugzeuges, angeordnet ist. Das bewegliche Gepäckfachelement 3 ist beidseitig über Drehgelenke 4 mit Gelenkachsen 4' an dem feststehenden Gepäckfachelement 2 aufgehängt. Demnach ist eine einachsige Aufhängung des unteren Gepäckfachelementes vorgesehen. Die Drehgelenke 4 befinden sich an überlappenden Abschnitten von Seitenwänden 5 des unteren Gepäckfachelements 3 und Seitenpaneelen 6 des oberen Gepäckfachelements 2. Die Seitenwände 5 des unteren Gepäckfachelements 3 und die Seitenpaneele 6 des oberen Gepäckfachelements 2 sind jeweils im Wesentlichen eben bzw. plan ausgebildet, wobei die Seitenwände 5 des unteren Gepäckfachelements 3 im Wesentlichen parallel zu den Seitenpaneelen 6 des oberen Gepäckfachelements 2 angeordnet sind. Die Seitenwände 5 des unteren Gepäckfachelements 3 stehen seitlich von einem Boden 5a hoch, so dass das untere Gepäckfachelement 3 zur Aufnahme von Gepäckstücken als Mulde, Halbschütte bzw. U-förmiges Gepäckfach ausgebildet ist. Das untere Gepäckfachelement 3 ist zwischen einer Offenstellung (vgl. das Überkopf-Gepäckfach 1 in Fig. 1 links), in welcher eine Ladeöffnung 7 freigegeben ist, und einer Schließstellung (vgl. das Überkopf-Gepäckfach 1 in Fig. 1 rechts), in welcher die Ladeöffnung 7 verschlossen ist, verschwenkbar. Zur Unterstützung des Schließvorgangs ist zwischen dem oberen Gepäckfachelement 2 und dem unteren Gepäckfachelement 3 eine Hebefeder 9 angeordnet, mit welcher der Schließvorgang unterstützt wird. Zu diesem Zweck kann die Hebefeder 9, wie nachstehend näher erläutert wird, beim Öffnen des Gepäckfaches 1 gespannt werden, so dass die gespeicherte Federenergie beim Schließen des Gepäckfaches 1 zur Verfügung steht. Darüber hinaus ist ein Dämpfungselement 10 vorgesehen, mit welchem die Verschwenkung des unteren Gepäckfachelementes 3 gedämpft wird. Das Dämpfungselement 10 ist in der gezeigten Ausführung in an sich bekannter Weise als Öldämpfer ausgeführt. Selbstverständlich können jedoch auch andere Dämpfungsmedien verwendet werden. Die Längsachse des Dämpfungselements 10 erstreckt sich in der gezeigten Ausführung im Wesentlichen parallel und in einem Abstand zur Längsachse der Hebefeder 9 erstreckt.

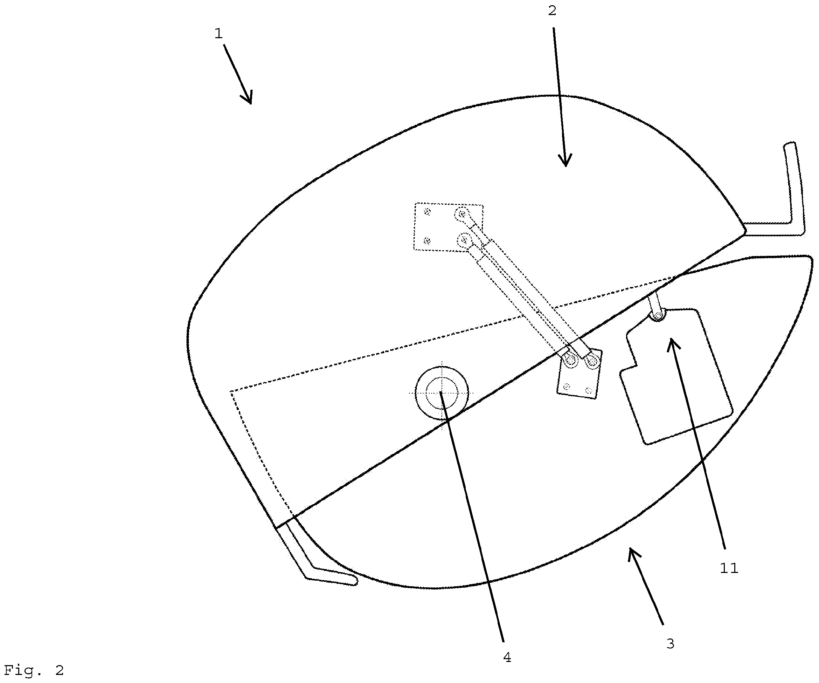

Wie aus Fig. 1 bis 4 weiters ersichtlich, weist das Gepäckfach 1 eine Halteeinrichtung 11 zur Fixierung des unteren Gepäckfachelements 3 in dessen Schließstellung auf, in welcher die Ladeöffnung 7 vollständig verschlossen ist. Die Halteeinrichtung 11 weist ein Anschlagelement 12 auf, welches unbeweglich an der Unterseite des Seitenpaneels 6 des oberen Gepäckfachelements 2 angeordnet ist. Als Anschlagelement 12 ist ein Schlagstift vorgesehen. Die Halteeinrichtung 11 weist zudem eine Hakeneinrichtung 13 mit zwei kooperierenden Haken 14 auf, welche in der gezeigten Ausführung an der Seitenwand 5 des unteren Gepäckfachelements 3 angeordnet ist. In der Schließstellung des unteren Gepäckfachelementes 3 (vgl. Fig. 2) ist die Hakeneinrichtung 13 mit dem Anschlagelement 12 verrastet. Zur Freigabe der Halteeinrichtung 11 weist das untere Gepäckfachelement 3 an der Vorder- bzw. Sichtseite einen Betätigungsgriff 15 auf. Über den Betätigungsgriff 15 kann das Anschlagelement 12 der Halteeinrichtung 11 vom Eingriff der Hakeneinrichtung 13 befreit werden, so dass das untere Gepäckfachelement in Richtung der Offenstellung bewegt werden kann.

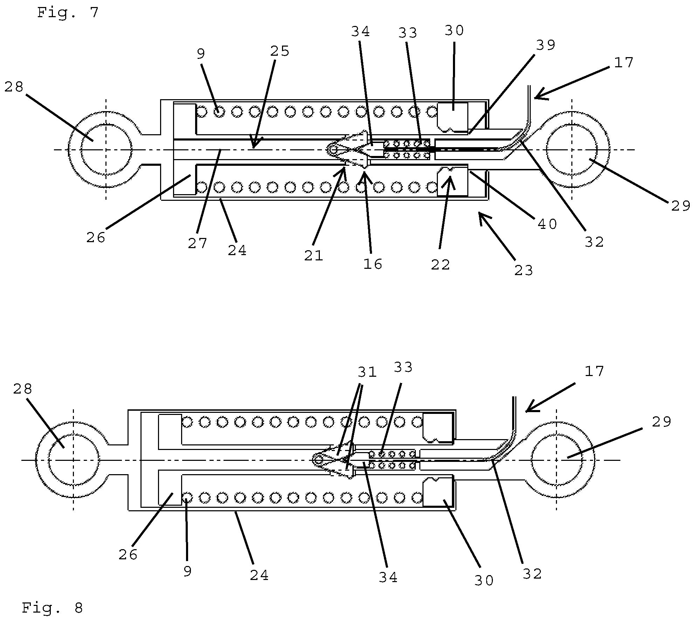

In der gezeigten Ausführung weist das Überkopf-Gepäckfach 1 zudem eine in den Fig. 7 bis 11 ersichtliche Rückhalteeinrichtung 16 zur Fixierung bzw. Blockierung der Hebefeder 9 im gespannten Zustand auf. Die Rückhalteeinrichtung 16 ist dazu ausgebildet, die Hebefeder 9 im gespannten Zustand zu halten, bis der Benutzer die Wirkung der Hebefeder 9 freischaltet. Zu diesem Zweck ist die Rückhalteeinrichtung 16 mit dem Betätigungsgriff 15 verbunden, welcher vorzugsweise manuell betätigbar ist. Über den Betätigungsgriff 15 kann die Rückhalteeinrichtung 16 in der Offenstellung des unteren Gepäckfachelementes 3 in eine Auslöseposition überführt werden, in welcher die Fixierung der Hebefeder 9 im gespannten Zustand aufgehoben ist. In diesem Fall kann das untere Gepäckfachelement 3 mit Unterstützung durch die Hebefeder 9 nach oben verschwenkt werden. Beim nächsten Öffnungsvorgang wird die Hebefeder 9 wieder gespannt. Ohne Freigabe der Rückhalteeinrichtung 16 über den Betätigungsgriff 15 bleibt die Hebefeder 9 bei der Überführung von der Schließstellung in die Offenstellung im gespannten Zustand, so dass das untere Gepäckfachelement 3 ohne Federunterstützung angehoben werden kann.

In der gezeigten Ausführung sind entsprechende Hebefedern 9, Dämpfungselemente 10, Rückhalteeinrichtungen 16 und Halteeinrichtungen 11 an gegenüberliegenden Seiten des Gepäckfaches 1 vorgesehen. Der Einfachheit halber wird in der Figurenbeschreibung lediglich auf eine Seite des Gepäckfaches 1 Bezug genommen. Diese Erläuterungen gelten sinngemäß für die andere Seite des Gepäckfaches 1. Grundsätzlich könnten die genannten Einrichtungen aber auch nur auf einer Seite des unteren Gepäckfachelementes 3 vorgesehen sein.

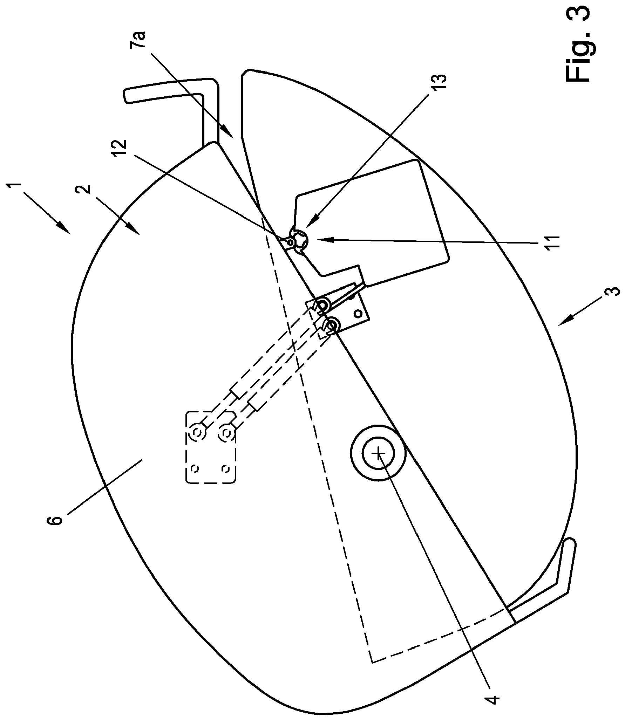

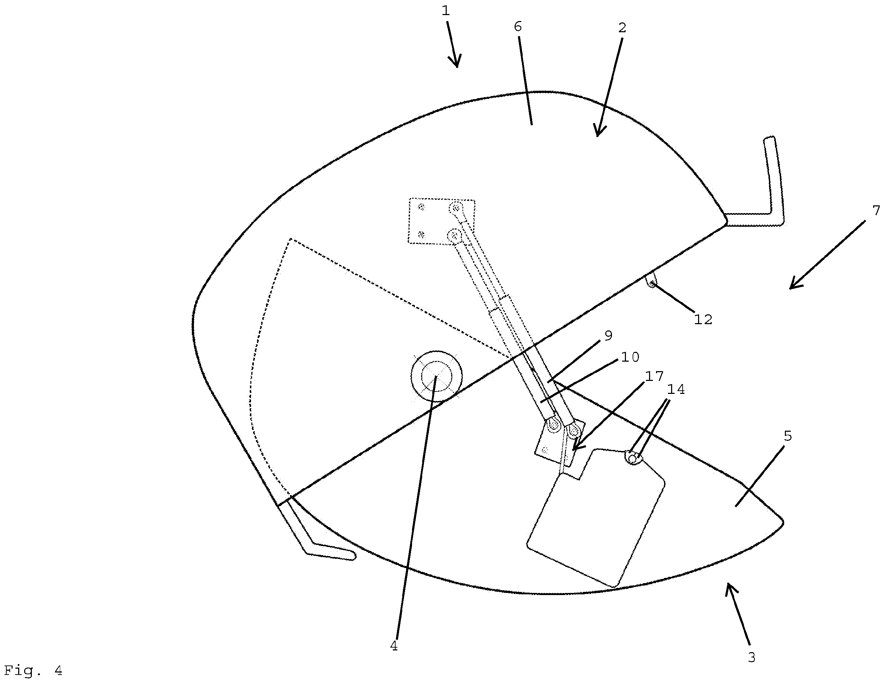

Gemäß Fig. 2 ist das untere Gepäckfachelement 3 in der Schließstellung angeordnet, in der das untere Gepäckfachelement 3 mittels der Halteeinrichtung 11 an dem oberen Gepäckfachelement 2 gehalten ist. Wenn der Schließvorgang im entspannten Zustand der Hebefeder 9 eingeleitet wird und das untere Gepäckfachelement 3 im unbeladenen Zustand vorliegt, bewirkt die Freigabe der Halteeinrichtung 11 über den Betätigungsgriff 15, dass das untere Gepäckfachelement 3 selbständig in eine in Fig. 3 dargestellte Zwischenstellung gelangt. In der Zwischenstellung gemäß Fig. 3 ist ein Öffnungsspalt 7a zwischen benachbarten Vorderkanten des oberen 2 und unteren Gepäckfachelementes 3 gebildet. Der Öffnungsspalt 7a weist eine Höhe von 1 bis 4 cm, vorzugsweise im Wesentlichen 3 cm, auf. Der Benutzer kann in den Öffnungsspalt 7a eingreifen, um das untere Gepäckfachelement 3 gegen die Kraft der Hebefeder 9 in die Offenstellung gemäß Fig. 4 zu ziehen. In der Offenstellung des unteren Gepäckfachelementes 3 liegt die Hebefeder 9 im gespannten Zustand vor. Demnach wird das untere Gepäckfachelement 3 von der Schließstellung in die Offenstellung zunächst um eine erste Wegstrecke im entspannten Zustand der Hebefeder 9 und danach um eine zweite Wegstrecke gegen die Kraft der Hebefeder 9 verschwenkt. Die erste Wegstrecke des unteren Gepäckfachelementes 3 ist kleiner als die zweite Wegstrecke des unteren Gepäckfachelementes 3, so dass in der Zwischenstellung des unteren Gepäckfachelementes 3 der Öffnungsspalt 7a gebildet ist. Wenn der Schließvorgang mit im gespannten Zustand fixierter Hebefeder 9 eingeleitet wird, kann das untere Gepäckfachelement 3 im unbeladenen Zustand direkt von der Schließ- in die Offenstellung abgesenkt werden.

In der gezeigten Ausführung ist zur Betätigung der Halteeinrichtung 11 und der Rückhalteeinrichtung 16 ein- und derselbe Betätigungsgriff 15 vorgesehen. Der Benutzer kann den Betätigungsgriff 15 in der Schließstellung des unteren Gepäckfachelementes 3 betätigen, um den Öffnungsvorgang durch Auslösen der Halteeinrichtung 11 einzuleiten. Andererseits kann der Betätigungsgriff 15 in der Offenstellung betätigt werden, um die Hebefeder 9 für den Schließvorgang freizuschalten. Zu diesem Zweck ist der Betätigungsgriff 15 mit einer Auslöseeinrichtung 17 verbunden, mit welcher einerseits die Halteeinrichtung 11 und andererseits die Rückhalteeinrichtung 16 freigegeben werden kann. In der Offenstellung des Gepäckfaches 1 kann der Betätigungsgriff 15 zwischen einer ersten und einer zweiten Position bewegt werden, um die Rückhalteeinrichtung 16 aus einer Halteposition in eine Auslöseposition zu bringen. In der Schließstellung des Gepäckfaches 1 kann der Betätigungsgriff 15 zwischen einer ersten Position und einer dritten Position bewegt werden, um die Halteeinrichtung 11 von einer Haltestellung, in welcher das untere Gepäckfachelement 3 selbständig in der Schließstellung gehalten ist, in eine Freigabestellung, in welcher das untere Gepäckfachelement 3 in die Offenstellung verschwenkt werden kann, zu überführen. Vorzugsweise ist die zweite Position des Betätigungsgriffes 15 von dessen dritter Position verschieden, so dass die verschiedenen Funktionen des Betätigungsgriffes 15 durch unterschiedliche Positionen verwirklicht sind. In der Halteposition ist die Rückhalteeinrichtung 16 dazu eingerichtet, das untere Gepäckfachelement 3 gegen die Wirkung der Hebefeder 9 selbständig in der Offenstellung zu halten. In der Auslöseposition der der Rückhalteeinrichtung 16 kann das untere Gepäckfachelement 3 unter Aufbringung einer vergleichsweise geringen Bedienkraft in die Offenstellung verschwenkt werden.

Wie aus Fig. 1 bis 6 ersichtlich, ist als Betätigungsgriff 15 ein Schwenkgriff vorgesehen, der zur Betätigung der Halteeinrichtung 11 bzw. der Rückhalteeinrichtung 16 um eine in Flugrichtung verlaufende Schwenkachse verschwenkbar ist. Zur Freigabe der Rückhalteeinrichtung 16 in der Offenstellung ist eine Verschwenkung des Betätigungsgriffes 15 um einen ersten, größeren Schwenkwinkel erforderlich, welcher beispielsweise 25° beträgt. Zur Freigabe der Halteeinrichtung 11 in der Schließstellung genügt eine Verschwenkung des Betätigungsgriffes 15 um einen zweiten, kleineren Schwenkwinkel, welcher beispielsweise 15° beträgt. Um Fehlbedienungen zu vermeiden, unterliegt die Verschwenkung des Schwenkgriffes einem spürbaren Anstieg des Widerstands zwischen dem zweiten, kleineren Schwenkwinkel und dem ersten, größeren Schwenkwinkel.

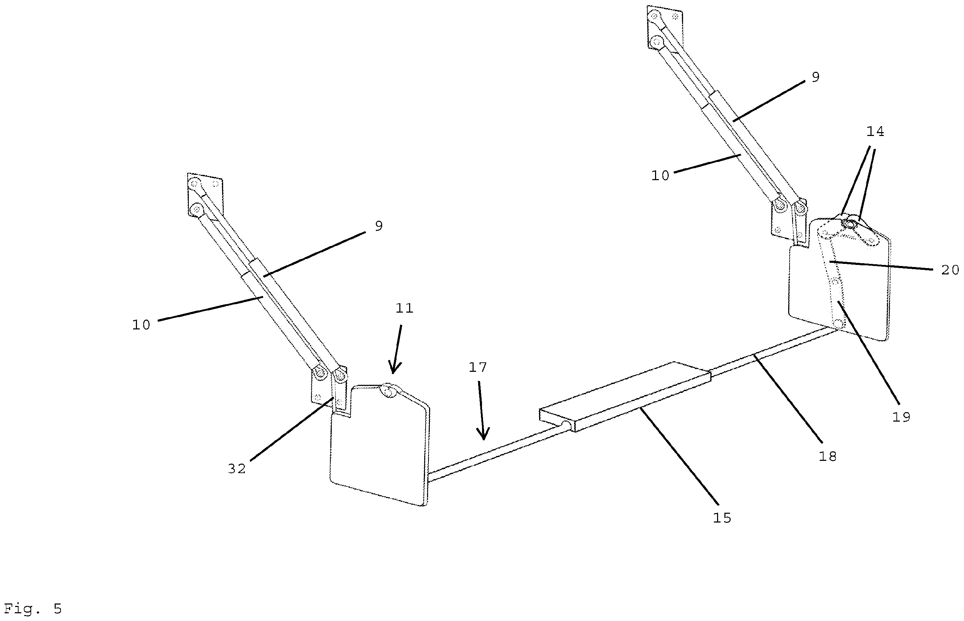

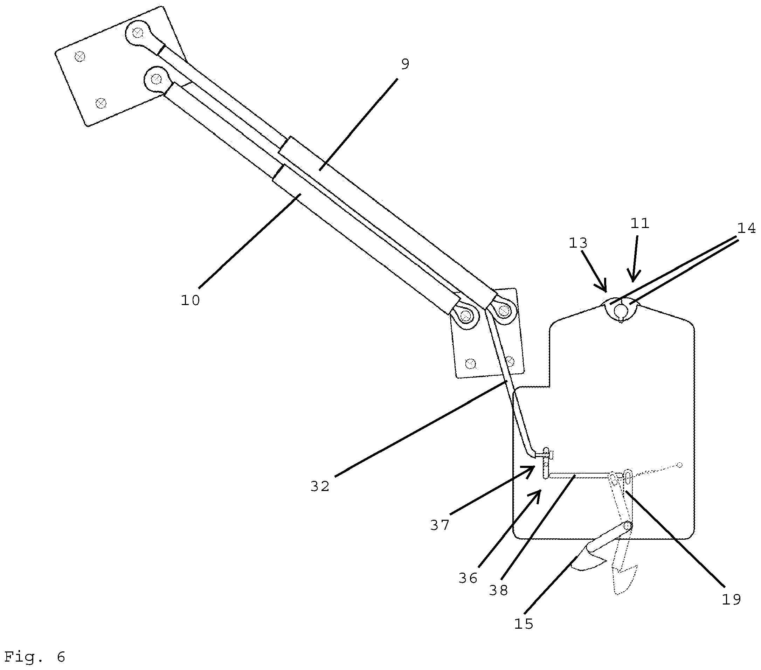

Wie aus Fig. 5, 6 ersichtlich, weist die Auslöseeinrichtung 17 eine drehfest mit dem Schwenkgriff 15 gekoppelte Drehwelle 18 auf, welche von dem Schwenkgriff in Längsrichtung des Gepäckfaches 1 zur Seitenwand 5 des unteren Gepäckfachelements 3 führt. Die Drehwelle 18 ist drehfest mit einem Betätigungshebel 19 verbunden, mit welchem einerseits die Halteeinrichtung 11 und andererseits die Rückhalteeinrichtung 16 betätigt wird. Die Hakeneinrichtung 13 der Halteeinrichtung 11 ist über einen verschwenkbaren Umlenkhebel 20 mit dem Betätigungshebel 19 verbunden, welcher durch Betätigung des Schwenkgriffs verschwenkt wird. Die Verschwenkung des Betätigungshebels 19 wird in eine gegenläufige Verschwenkung des Umlenkhebels 20 gegen die Kraft einer Feder (nicht gezeigt) umgesetzt, wodurch in der Schließstellung das Anschlagelement 12 von den Haken 14 freigegeben werden kann.

Wie aus Fig. 5, 6 weiters ersichtlich, weist die Auslöseeinrichtung 17 zudem einen Seilzug 32 auf, mit dem eine Zugkraft auf die Rückhalteeinrichtung 16 aufgebracht werden kann, um diese in die Auslöseposition zu bringen. Um die Schwenkbewegung des Betätigungshebels 19 auf den Seilzug 32 zu übertragen, ist ein Umlenkelement 36 zwischen dem Betätigungshebel 19 und dem Seilzug 32 vorgesehen. Das Umlenkelement 36 weist einen verschwenkbar gelagerten Schwenkstift 37 auf, wobei am einen Ende des Schwenkstifts 37 der Seilzug 32 angebracht ist. Am anderen Ende des Schwenkstifts 37 greift ein Zapfen 38 an, der mittels des freien Endes des Betätigungshebels 19 verschieblich ist.

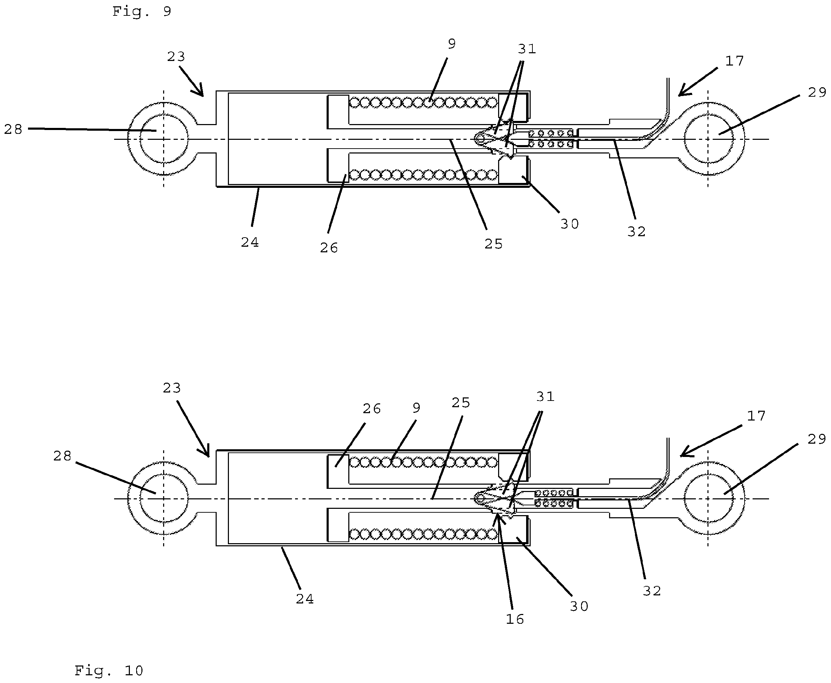

Wie aus Fig. 7 bis 11 ersichtlich, weist die Rückhalteeinrichtung 16 ein erstes Rastelement 21 und ein zweites Rastelement 22 auf. In der Offenstellung des unteren Gepäckfachelementes 3, im gespannten Zustand der Hebefeder 9 (vgl. Fig. 9) ist das erste Rastelement 21 mit dem zweiten Rastelement 22 verrastet, so dass die Hebefeder 9 im gespannten Zustand blockiert ist. Die Verrastung des ersten 21 und zweiten Rastelements 22 kann durch Betätigung des Betätigungsgriffs 15 gelöst werden, wie nachstehend näher erläutert wird.

In der gezeigten Ausführung ist ein Zylinder-Kolben-Element 23 vorgesehen, welches ein insbesondere zylindrisches Gehäuseelement 24 zur Aufnahme der Hebefeder 9 und ein darin verschieblich gelagertes Kolbenelement 25 zum Spannen der Hebefeder 9 aufweist. Das Kolbenelement 25 weist einen Kolben 26 auf, welcher am einen Ende der Hebefeder 9 anliegt. Darüber hinaus weist das Kolbenelement 25 eine Kolbenstange 27 auf, welche die Hebefeder 9 zentral durchsetzt. In der gezeigten Ausführung ist als Hebefeder 9 eine Schraubendruckfeder vorgesehen. Durch Verschiebung des Kolbenelements 25 relativ zum Gehäuseelement 24 kann die Hebefeder 9 gestaucht werden. In der Offenstellung liegt die Hebefeder 9 stets im gespannten Zustand vor. Das Gehäuseelement 24 weist ein erstes Befestigungselement 28 auf, welches vorzugsweise an der Seitenwand 5 des unteren Gepäckfachelements 3 angebracht ist. Die Kolbenstange 27 des Kolbenelements 25 ist mit einem zweiten Befestigungselement 29 verbunden, welches vorzugsweise an dem Seitenpaneel 6 des oberen Gepäckfachelementes 2 angebracht ist. Dadurch wird die Verschwenkung des unteren Gepäckfachelementes 3 in eine Verschiebung des Kolbenelementes 25 relativ zum Gehäuseelement 24 umgewandelt.

In der gezeigten Ausführung ist die Rückhalteeinrichtung 16 vollständig im Innenraum des Gehäuseelements 24 angeordnet. Das erste Rastelement 21 der Rückhalteeinrichtung 16 ist mit der Kolbenstange 27 des Kolbenelements 25 verbunden. Das zweite Rastelement 22 ist an einem Gegenlagerelement 30 ausgebildet, welches gegenüberliegend des Kolbens 26 am anderen Ende der Hebefeder 9 anliegt. In der gezeigten Ausführung ist das Gegenlagerelement 30 durch eine Lagerscheibe gebildet, welche eine zentrale Durchtrittsöffnung zum Durchtritt der Kolbenstange 27 aufweist. Die Hebefeder 9 ist zwischen dem Kolben 26 des Kolbenelements 25 und dem Gegenlagerelement 30 angeordnet. Das Gegenlagerelement 30 ist ausgehend von der in Fig. 7 dargestellten Schließstellung des unteren Gepäckfachelementes 3 um eine Distanz verschieblich in dem Gehäuseelement 24 gelagert, welche einer ersten Wegstrecke des unteren Gepäckfachelementes 3 zwischen dessen Schließstellung (vgl. Fig. 2) und dessen Zwischenstellung (vgl. Fig. 3) entspricht.

In der gezeigten Ausführung weist das erste Rastelement 21 zwei um eine gemeinsame Schwenkachse gelagerte Rastschenkel 31 auf, welche durch Verschwenkung des Betätigungsgriffs 15 aus dem Rasteingriff mit dem zweiten Rastelement 22 gebracht werden können. Zu diesem Zweck weist die Auslöseeinrichtung 17 einen mit dem Seilzug 32 verbundenen, gegen die Kraft einer Feder 33 verschieblichen Spreizkeil 34 auf, welcher im verrasteten Zustand zwischen den Rastschenkeln 31 des ersten Rastelements 21 angeordnet ist. Die Rastschenkel 31 des ersten Rastelements 21 sind mit einer weiteren Feder (nicht gezeigt), nämlich einer Schenkelfeder, verbunden, mit welcher die Rastschenkel 31 in Richtung des unverrasteten Zustands vorgespannt sind.

In den Fig. 7 bis 11 sind die verschiedenen Zustände und Betriebsarten des Gepäckfaches 1 dargestellt.

Gemäß Fig. 7 ist das untere Gepäckfachelement 3 in der Schließstellung angeordnet, wobei die Hebefeder 9 im entspannten Zustand vorliegt.

Gemäß Fig. 8 wurde das untere Gepäckfachelement 3 durch Lösen der Halteeinrichtung 11 in der Zwischenstellung angeordnet, in welcher der Öffnungsspalt 7a zum Aufziehen des unteren Gepäckfachelementes 3 gebildet ist. Vorzugsweise ist die Hebefeder 9 zwischen der Schließstellung und der Zwischenstellung in einem im Vergleich zur Offenstellung geringfügig gespannten Zustand angeordnet, wodurch Vibrationen in der Zwischenstellung besser kompensiert werden können. Zu diesem Zweck weisen die Kolbenstange 27 und das Gegenlagerelement 30 korrespondierende Anschläge 39, 40 auf, welche die Hebefeder 9 zwischen der Schließ- und der Offenstellung im geringfügig gespannten Zustand halten.

Gemäß Fig. 9 ist das untere Gepäckfachelement 3 in die Offenstellung verschwenkt, wobei die Hebefeder 9 in den gespannten Zustand überführt wurde. Mit Erreichen der Offenstellung wird die Rastverbindung zwischen dem ersten Rastelement 21 und dem zweiten Rastelement 22 hergestellt, so dass die Hebefeder 9 im gespannten Zustand blockiert ist.

Gemäß Fig. 10 wird der Betätigungsgriff 15 zur Freigabe der Rückhalteeinrichtung 16 betätigt. Die Bewegung des Betätigungsgriffs 15 wird über die Auslöseeinrichtung 17 auf die Rückhalteeinrichtung 16 übertragen, so dass die Hebefeder 9 beim Hochschwenken des unteren Gepäckfachelements 3 entspannt wird.

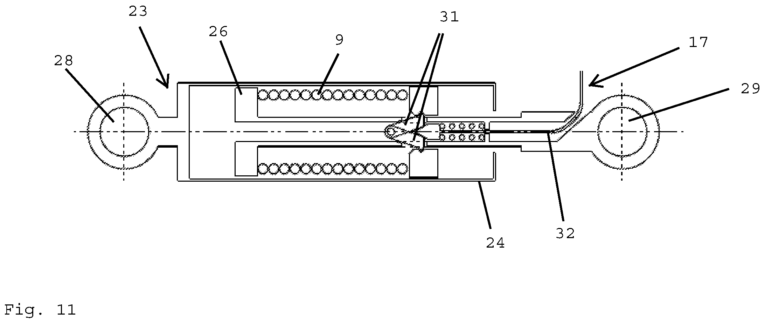

In Fig. 11 ist eine alternative Verwendungsmöglichkeit des Gepäckfaches 1 gezeigt, bei welcher das untere Gepäckfachelement 3 im gespannten Zustand der Hebefeder 9, d.h. mit aktiver Rückhalteeinrichtung 16, in Richtung der Schließstellung verschwenkt wird. In diesem Fall wird der Schließvorgang ohne Federunterstützung durchgeführt. Die Hebefeder 9 liegt dann in der Schließstellung im gespannten Zustand vor. Über den Betätigungsgriff 15 kann wiederum der Öffnungsvorgang eingeleitet werden. Da die Hebefeder 9 bereits im gespannten Zustand vorliegt, kann das untere Gepäckfachelement 3 unmittelbar von der Schließ- in die Offenstellung gelangen. In der Offenstellung kann der Benutzer auswählen, ob der nächste Schließvorgang mit oder ohne Federunterstützung vorgenommen wird.

## Patentansprüche

1. Überkopf-Gepäckfach (1) für ein Flugzeug mit einem oberen Gepäckfachelement (2), mit einem unteren Gepäckfachelement (3), welches zwischen einer Schließ- und einer Offenstellung beweglich ist, mit einer Halteeinrichtung (11) zum Halten des unteren Gepäckfachelements in dessen Schließstellung, mit einer Hebefeder (9) zur Unterstützung der Bewegung des unteren Gepäckfachelements (3) aus der Offenstellung in die Schließstellung, und mit einer Rückhalteeinrichtung (16) zur Fixierung der Hebefeder (9) im gespannten Zustand in der Offenstellung des unteren Gepäckfachelementes (3), wobei ein Betätigungsgriff (15) zur Freigabe der Rückhalteeinrichtung (16) in der Offenstellung des unteren Gepäckfachelementes (3) vorgesehen ist, **dadurch gekennzeichnet, dass** das untere Gepäckfachelement (3) unabhängig von dessen Beladungszustand, wahlweise mit Unterstützung durch die Hebefeder (9) oder mit im gespannten Zustand fixierter Hebefeder (9) von der Offenstellung in Richtung der Schließstellung beweglich ist.

2. Überkopf-Gepäckfach (1) nach Anspruch 1, **dadurch gekennzeichnet, dass** der Betätigungsgriff (15) weiters zur Freigabe der Halteeinrichtung (11) in der Schließstellung des unteren Gepäckfachelementes (3) eingerichtet ist.

3. Überkopf-Gepäckfach (1) nach Anspruch 1 oder 2, **dadurch gekennzeichnet, dass** als Betätigungsgriff (15) ein Schwenkgriff vorgesehen ist, welcher vorzugsweise an der Vorderseite des unteren Gepäckfachelementes (3), insbesondere im Wesentlichen mittig zwischen zwei Seitenwänden (5) des unteren Gepäckfachelementes (3), angeordnet ist, wobei der Schwenkgriff bevorzugt dazu eingerichtet ist, in der Offenstellung des unteren Gepäckfachelementes (3) die Rückhalteeinrichtung (16) durch Verschwenkung des Schwenkgriffs um einen ersten Schwenkwinkel und in der Schließstellung des unteren Gepäckfachelementes (3) die Halteeinrichtung (11) durch Verschwenkung des Schwenkgriffs um einen zweiten Schwenkwinkel freizugeben, wobei der zweite Schwenkwinkel kleiner als der erste Schwenkwinkel ist.

4. Überkopf-Gepäckfach (1) nach einem der Ansprüche 1 bis 3, **dadurch gekennzeichnet, dass** das untere Gepäckfachelement (3) von der Schließstellung in die Offenstellung um eine erste Wegstrecke im entspannten Zustand der Hebefeder (9) und um eine zweite Wegstrecke gegen die Kraft der Hebefeder (9) beweglich ist, wobei die erste Wegstrecke des unteren Gepäckfachelementes (3) kleiner als die zweite Wegstrecke des unteren Gepäckfachelementes (3) ist, wobei in dem um die erste Wegstrecke bewegten Zustand des unteren Gepäckfachelementes (3) bevorzugt ein Öffnungsspalt (7a) von 1 bis 4 cm, vorzugsweise im Wesentlichen 3 cm, zwischen benachbarten Vorderkanten des oberen (2) und unteren Gepäckfachelementes (3) gebildet ist.

5. Überkopf-Gepäckfach (1) nach einem der Ansprüche 1 bis 4, **dadurch gekennzeichnet, dass** die Rückhalteeinrichtung (16) ein erstes (21) und ein zweites Rastelement (22) aufweist, welche in der Offenstellung des unteren Gepäckfachelementes (3), im gespannten Zustand der Hebefeder (9) miteinander verrastbar sind, wobei die Verrastung des ersten (21) und zweiten Rastelements (22) durch Betätigung des Betätigungsgriffs (15) lösbar ist.

6. Überkopf-Gepäckfach (1) nach einem der Ansprüche 1 bis 5, **dadurch gekennzeichnet, dass** ein Gehäuseelement (24) zur Aufnahme der Hebefeder (9) und ein relativ zum Gehäuseelement (24) verschiebliches Kolbenelement (25) zum Spannen der Hebefeder (9) vorgesehen sind.

7. Überkopf-Gepäckfach (1) nach einem der Ansprüche 1 bis 6, **dadurch gekennzeichnet, dass** die Rückhalteeinrichtung (16) zumindest teilweise im Inneren des Gehäuseelements (24) angeordnet ist.

8. Überkopf-Gepäckfach (1) nach einem der Ansprüche 5 bis 7, **dadurch gekennzeichnet, dass** das erste Rastelement (21) der Rückhalteeinrichtung (16) mit einer Kolbenstange (27) des Kolbenelements (25) verbunden ist.

9. Überkopf-Gepäckfach (1) nach einem der Ansprüche 6 bis 8, **dadurch gekennzeichnet, dass** die Hebefeder (9) zwischen einem Kolben (26) des Kolbenelements (25) und einem Gegenlagerelement (30) angeordnet ist, wobei das Gegenlagerelement (30) entsprechend der ersten Wegstrecke verschieblich in dem Gehäuseelement (24) angeordnet ist, wobei das Gegenlagerelement (30) bevorzugt das zweite Rastelement (22), insbesondere eine Rastvertiefung, zur Verrastung mit dem ersten Rastelement (21) an der Kolbenstange (27) des Kolbenelements (25) aufweist.

10. Überkopf-Gepäckfach (1) nach einem der Ansprüche 1 bis 9, **dadurch gekennzeichnet, dass** der Betätigungsgriff (15) über eine Auslöseeinrichtung (17) mit der Rückhalteeinrichtung (16) verbunden ist, wobei die Auslöseeinrichtung (17) bevorzugt eine mit dem Betätigungsgriff (15) gekoppelte Drehwelle (18) aufweist, wobei die Auslöseeinrichtung (17) bevorzugt einen mit der Drehwelle (18) verbundenen Betätigungshebel (19) aufweist, der mit der Halteeinrichtung (11) verbunden ist.

11. Überkopf-Gepäckfach (1) nach Anspruch einem der Ansprüche 5 bis 10, **dadurch gekennzeichnet, dass** das erste Rastelement (21) zumindest einen durch die Auslöseeinrichtung (17) verschwenkbaren Rastschenkel (31) aufweist, wobei vorzugsweise zwei um eine gemeinsame Schwenkachse gelagerte Rastschenkel (31) vorgesehen sind.

12. Überkopf-Gepäckfach (1) nach Anspruch 10 oder 11, **dadurch gekennzeichnet, dass** die Auslöseeinrichtung (31) einen Seilzug (32) und einen mit dem Seilzug (32) verbundenen, gegen die Kraft einer Feder (33) verschieblichen Spreizkeil (34) aufweist, welcher im verrasteten Zustand zwischen den Rastschenkeln (31) des ersten Rastelements (21) angeordnet ist.

13. Überkopf-Gepäckfach (1) nach Anspruch 10 oder 11, **dadurch gekennzeichnet, dass** die Rastschenkel (31) mit einer weiteren Feder, insbesondere Schenkelfeder, verbunden sind, mit welcher die Rastschenkel (31) in Richtung des unverrasteten Zustands vorgespannt sind.

14. Überkopf-Gepäckfach (1) nach einem der Ansprüche 1 bis 13, **dadurch gekennzeichnet, dass** ein Dämpfungselement (10) zur Dämpfung der Bewegung des unteren Gepäckfachelements (3) von der Schließstellung in die Offenstellung vorgesehen ist, wobei sich die Längsachse des Dämpfungselements (10) vorzugsweise im Wesentlichen parallel und in einem Abstand zur Längsachse der Hebefeder (9) erstreckt.

15. Flugzeug mit einem Überkopf-Gepäckfach (1) nach einem der Ansprüche 1 bis 14.

## Claims

1. Overhead luggage compartment (1) for an aircraft, comprising an upper luggage compartment element (2), comprising a lower luggage compartment element (3), which can be moved between a closed and an open position, comprising a holding device (11) for holding the lower luggage compartment element in the closed position thereof, comprising a lifting spring (9) for supporting the movement of the lower luggage compartment element (3) from the open position to the closed position, and comprising a retaining device (16) for securing the lifting spring (9) in the tensioned state in the open position of the lower luggage compartment element (3), an operating handle (15) for releasing the retaining device (16) in the open position of the lower luggage compartment element (3) being provided, **characterised in that** the lower luggage compartment element (3), irrespective of the load condition thereof, can be moved from the open position towards the closed position optionally with assistance from the lifting spring (9) or with the lifting spring (9) secured in the tensioned state.

2. Overhead luggage compartment (1) according to claim 1, **characterised in that** the operating handle (15) is further designed to release the holding device (11) in the closed position of the lower luggage compartment element (3).

3. Overhead luggage compartment (1) according to either claim 1 or claim 2, **characterised in that**
a pivoting handle is provided as the operating handle (15) and is preferably arranged on the front side of the lower luggage compartment element (3), in particular substantially centrally between two side walls (5) of the lower luggage compartment element (3), the pivoting handle preferably being designed, in the open position of the lower luggage compartment element (3), to release the retaining device (16) by pivoting the pivoting handle by a first pivot angle and, in the closed position of the lower luggage compartment element (3), to release the holding device (11) by pivoting the pivoting handle by a second pivot angle, the second pivot angle being smaller than the first pivot angle.

4. Overhead luggage compartment (1) according to any of claims 1 to 3, **characterised in that**
the lower luggage compartment element (3) can be moved from the closed position to the open position by a first distance in the untensioned state of the lifting spring (9) and by a second distance against the force of the lifting spring (9), the first distance of the lower luggage compartment element (3) being smaller than the second distance of the lower luggage compartment element (3), and, in the state in which the lower luggage compartment element (3) is moved by the first distance, an opening gap (7a) of 1 to 4 cm, preferably substantially 3 cm, preferably being formed between adjacent leading edges of the upper (2) and lower luggage compartment element (3).

5. Overhead luggage compartment (1) according to any of claims 1 to 4, **characterised in that**
the retaining device (16) has a first (21) and a second locking element (22) which can be locked together in the open position of the lower luggage compartment element (3) in the tensioned state of the lifting spring (9), it being possible to release the locking of the first (21) and second locking element (22) by operating the operating handle (15).

6. Overhead luggage compartment (1) according to any of claims 1 to 5, **characterised in that**
a housing element (24) for accommodating the lifting spring (9) is provided and a piston element (25) that can be moved relative to the housing element (24) for tensioning the lifting spring (9) is provided.

7. Overhead luggage compartment (1) according to any of claims 1 to 6, **characterised in that**
the retaining device (16) is arranged at least partially inside the housing element (24).

8. Overhead luggage compartment (1) according to any of claims 5 to 7, **characterised in that**
the first locking element (21) of the retaining device (16) is connected to a piston rod (27) of the piston element (25).

9. Overhead luggage compartment (1) according to any of claims 6 to 8, **characterised in that**
the lifting spring (9) is arranged between a piston (26) of the piston element (25) and a counter bearing element (30), the counter bearing element (30) being arranged in the housing element (24) so as to move according to the first distance, the counter bearing element (30) preferably having the second locking element (22), in particular a locking recess, for locking with the first locking element (21) on the piston rod (27) of the piston element (25).

10. Overhead luggage compartment (1) according to any of claims 1 to 9, **characterised in that**
the operating handle (15) is connected to the retaining device (16) by means of a release device (17), the release device (17) preferably having a rotary shaft (18) coupled to the operating handle (15), the release device (17) preferably having an operating lever (19) which is connected to the rotary shaft (18) and is connected to the holding device (11).

11. Overhead luggage compartment (1) according to any of claims 5 to 10, **characterised in that**
the first locking element (21) has at least one locking limb (31) which can be pivoted by the release device (17), preferably two locking limbs (31) mounted about a common pivoting axis being provided.

12. Overhead luggage compartment (1) according to either claim 10 or claim 11, **characterised in that**
the release device (31) has a cable (32) and has an expanding wedge (34) which is connected to the cable (32), can move against the force of a spring (33), and which in the locked state is arranged between the locking limbs (31) of the first locking element (21).

13. Overhead luggage compartment (1) according to either claim 10 or claim 11, **characterised in that**
the locking limbs (31) are connected to a further spring, in particular a leg spring, by means of which the locking limbs (31) are pre-loaded in the direction of the unlocked state.

14. Overhead luggage compartment (1) according to any of claims 1 to 13, **characterised in that**
a damping element (10) is provided for damping the movement of the lower luggage compartment element (3) from the closed position to the open position, the longitudinal axis of the damping element (10) preferably extending substantially in parallel with and at a distance from the longitudinal axis of the lifting spring (9).

15. Aircraft comprising an overhead luggage compartment (1) according to any of claims 1 to 14.

## Revendications

1. Structure suspendue de compartiment pour bagages (1) pour un aéronef, avec un élément de compartiment pour bagages supérieur (2), avec un élément de compartiment pour bagages inférieur (3), qui est mobile entre une position d'ouverture et une position de fermeture, avec un dispositif de maintien (11) destiné à maintenir l'élément de compartiment pour bagages inférieur dans sa position de fermeture, avec un ressort de levage (9) destiné à assister le mouvement de l'élément de compartiment pour bagages inférieur (3) à partir de la position d'ouverture vers la position de fermeture, et avec un dispositif de retenue (16) destiné à la fixation du ressort de levage (9) dans l'état tendu dans la position d'ouverture de l'élément de compartiment pour bagages inférieur (3), dans laquelle une poignée d'actionnement (15) est prévue pour la libération du dispositif de retenue (16) dans la position d'ouverture de l'élément de compartiment pour bagages inférieur (3), **caractérisée en ce que**, indépendamment de son état de charge, l'élément de compartiment pour bagages inférieur (3) est mobile de la position d'ouverture en direction de la position de fermeture, au choix avec l'assistance apportée par le ressort de levage (9) ou avec le ressort de levage (9) fixé dans l'état tendu.

2. Structure suspendue de compartiment pour bagages (1) selon la revendication 1, **caractérisée en ce que** de plus la poignée d'actionnement (15) est agencée pour la libération du dispositif de maintien (11) dans la position de fermeture de l'élément de compartiment pour bagages inférieur (3).

3. Structure suspendue de compartiment pour bagages (1) selon la revendication 1 ou 2, **caractérisée en ce que**, en tant que poignée d'actionnement (15), il est prévu une poignée pivotante qui est disposée de préférence sur le côté antérieur de l'élément de compartiment pour bagages inférieur (3), en particulier essentiellement de façon centrée entre deux parois latérales (5) de l'élément de compartiment pour bagages inférieur (3), dans laquelle la poignée pivotante est de préférence agencée pour, dans la position d'ouverture de l'élément de compartiment pour bagages inférieur (3), libérer le dispositif de retenue (16) par pivotement de la poignée pivotante selon un premier angle de pivotement et, dans la position de fermeture de l'élément de compartiment pour bagages inférieur (3), libérer le dispositif de maintien (11) par un pivotement de la poignée pivotante selon un deuxième angle de pivotement, dans laquelle le deuxième angle de pivotement est plus petit que le premier angle de pivotement.

4. Structure suspendue de compartiment pour bagages (1) selon l'une des revendications 1 à 3, **caractérisée en ce que** l'élément de compartiment pour bagages inférieur (3) est mobile de la position de fermeture vers la position d'ouverture selon un premier parcours dans l'état détendu du ressort de levage (9) et selon un deuxième parcours contre la force du ressort de levage (9), dans laquelle le premier parcours de l'élément de compartiment pour bagages inférieur (3) est plus court que le deuxième parcours de l'élément de compartiment pour bagages inférieur (3), dans laquelle, dans l'état déplacé de l'élément de compartiment pour bagages inférieur (3) selon le premier parcours, il est formé de préférence un interstice d'ouverture (7a) de 1 à 4 cm, de préférence essentiellement de 3 cm, entre des arêtes antérieures voisines de l'élément de compartiment pour bagages supérieur (2) et de l'élément de compartiment pour bagages inférieur (3).

5. Structure suspendue de compartiment pour bagages (1) selon l'une des revendications 1 à 4, **caractérisée en ce que** le dispositif de retenue (16) comporte un premier (21) et un deuxième élément d'encliquetage (22) qui, dans la position d'ouverture de l'élément de compartiment pour bagages inférieur (3), peuvent s'encliqueter l'un avec l'autre dans l'état tendu du ressort de levage (9), dans laquelle l'encliquetage du premier (21) et du deuxième élément d'encliquetage (22) peut être détaché par l'actionnement de la poignée d'actionnement (15).

6. Structure suspendue de compartiment pour bagages (1) selon l'une des revendications 1 à 5, **caractérisée en ce qu'**il est prévu un élément de boîtier (24) pour loger le ressort de levage (9) et un élément de piston (25) déplaçable par rapport à l'élément de boîtier (24) pour la mise en tension du ressort de levage (9).

7. Structure suspendue de compartiment pour bagages (1) selon l'une des revendications 1 à 6, **caractérisée en ce que** le dispositif de retenue (16) est disposé au moins partiellement à l'intérieur de l'élément de boîtier (24).

8. Structure suspendue de compartiment pour bagages (1) selon l'une des revendications 5 à 7, **caractérisée en ce que** le premier élément d'encliquetage (21) du dispositif de retenue (16) est raccordé à une tige de piston (27) de l'élément de piston (25).

9. Structure suspendue de compartiment pour bagages (1) selon l'une des revendications 6 à 8, **caractérisée en ce que** le ressort de levage (9) est disposé entre un piston (26) de l'élément de piston (25) et un élément de contrebutée (30), l'élément de contrebutée (30) étant disposé de façon déplaçable dans l'élément de boîtier (24) conformément au premier parcours, dans laquelle l'élément de contrebutée (30) comporte de préférence le deuxième élément d'encliquetage (22), en particulier un creux d'encliquetage, destiné à l'encliquetage avec le premier élément d'encliquetage (21) sur la tige de piston (27) de l'élément de piston (25).

10. Structure suspendue de compartiment pour bagages (1) selon l'une des revendications 1 à 9, **caractérisée en ce que** la poignée d'actionnement (15) est raccordée au dispositif de retenue (16) par le biais d'un dispositif de déclenchement (17), dans laquelle le dispositif de déclenchement (17) comporte de préférence un arbre rotatif (18) couplé à la poignée d'actionnement (15), dans laquelle le dispositif de déclenchement (17) comporte de préférence un levier d'actionnement (19), raccordé à l'arbre rotatif (18), qui est raccordé au dispositif de maintien (11).

11. Structure suspendue de compartiment pour bagages (1) selon l'une des revendications 5 à 10, **caractérisée en ce que** le premier élément d'encliquetage (21) comporte au moins une branche d'encliquetage (31) pouvant être amenée à pivoter par le dispositif de déclenchement (17), dans laquelle il est prévu de préférence deux branches d'encliquetage (31) supportées autour d'un axe pivotant commun.

12. Structure suspendue de compartiment pour bagages (1) selon la revendication 10 ou 11, **caractérisée en ce que** le dispositif de déclenchement (31) comprend un câble de traction (32) et un coin d'écartement (34), raccordé au câble de traction (32) et déplaçable contre la force d'un ressort (33), qui, dans l'état encliqueté, est disposé entre les branches d'encliquetage (31) du premier élément d'encliquetage (21).

13. Structure suspendue de compartiment pour bagages (1) selon la revendication 10 ou 11, **caractérisée en ce que** les branches d'encliquetage (31) sont raccordées à un autre ressort, en particulier un ressort à branches, avec lequel les branches d'encliquetage (31) sont pré-tendues en direction de l'état non encliqueté.

14. Structure suspendue de compartiment pour bagages (1) selon l'une des revendications 1 à 13, **caractérisée en ce qu'**il est prévu un élément d'amortissement (10) destiné à amortir le mouvement de l'élément de compartiment pour bagages inférieur (3) de la position de fermeture vers la position d'ouverture, l'axe longitudinal de l'élément d'amortissement (10) s'étendant de préférence essentiellement parallèlement et à distance de l'axe longitudinal du ressort de levage (9).

15. Aéronef avec une structure suspendue de compartiment pour bagages (1) selon l'une des revendications 1 à 14.
